# FASCICULE DE BREVET EUROPEEN

(11) **EP 3 938 625 B1**
(45) Date de publication et mention de la délivrance du brevet: **24.04.2024**
(21) Numéro de dépôt: 20725878.1
(22) Date de dépôt: 11.03.2020
(51) Int. Cl.: F01D 5/14, F01D 9/04, F02C 7/04, F02C 7/20, F02K 1/82, F02K 3/06

(54) **PORTION DE VEINE SECONDAIRE NON AXISYMÉTRIQUE**
NICHT-ACHSENSYMMETRISCHER SEKUNDÄRER KANALTEIL
NON-AXISYMMETRIC SECONDARY DUCT PORTION

(30) Priorité: 12.03.2019 FR 1902476
(43) Date de publication de la demande: 19.01.2022
(73) Titulaire: SAFRAN AIRCRAFT ENGINES, 75015 Paris (FR)
(72) Inventeur: MAZZELLA, Aurélien, 77550 Moissy-Cramayel (FR); SOULAT, Laurent, 77550 Moissy-Cramayel (FR)
(74) Mandataire: Regimbeau
(86) Numéro de dépôt international: PCT/FR2020/050505
(87) Numéro de publication internationale: WO 2020/183109

(56) Documents cités:
- EP-A1- 3 020 952
- EP-A2- 2 371 714
- FR-A1- 3 012 417
- US-A- 5 369 954

## Description

### DOMAINE TECHNIQUE GENERAL

L'invention concerne les veines secondaires de turbomachine double flux à fort taux de dilution (« *dilution ratio* » ou « *bypass ratio* »*,* BPR), en particulier la portion de veine secondaire où se situe des redresseurs de flux issue d'une soufflante (ou fan), appelé OGV (« *outlet guide vane* »)*.*

### ETAT DE L'ART

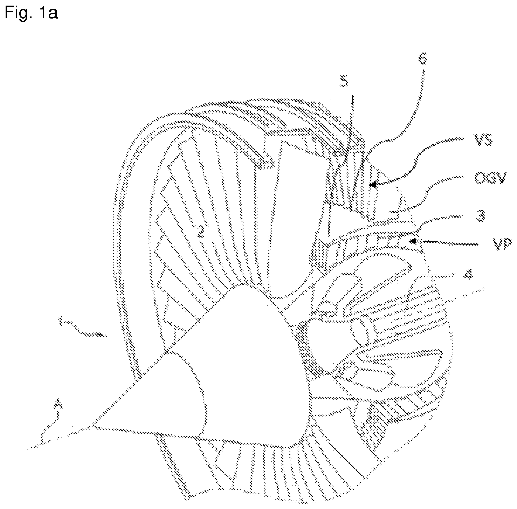

Comme illustré en **figure 1a****,** une turbomachine 1 comprend un fan 2 en aval duquel se trouve une veine primaire Vp, une veine secondaire VS radialement externe de la première.

La turbomachine 1 comprend classiquement un corps basse pression (avec notamment un compresseur basse pression 3, une turbine basse pression et un arbre basse pression 4 qui relie les deux) et un corps haute pression (avec notamment un compresseur haute pression, une turbine haute pression et un arbre haute pression qui relie les deux) et une chambre de combustion. Des architectures avec trois corps sont possibles. Enfin, le corps basse pression entraîne en rotation le fan 2, soit directement (« *direct drive »*), soit via un réducteur (non illustré).

La veine primaire Vp comprend successivement le compresseur basse pression 3, le compresseur haute pression, la chambre de combustion, la turbine haute pression, la turbine basse pression. Le flux primaire, qui traverse la veine primaire Vp fournit une part faible de la poussée totale. En effet, il s'agit du flux secondaire au travers de la veine secondaire VS, qui fournit la majeure partie de la poussée (BPR typiquement supérieur à 7:1).

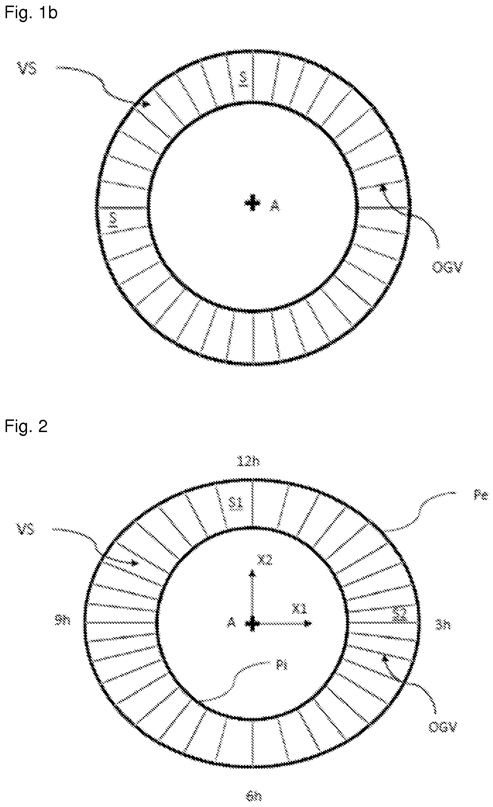

A la sortie du fan, en veine secondaire, se trouvent des redresseurs, appelés OGV, agencés en grille (par exemple entre 20 et 50 aubes de redresseurs sont disposés circonférentiellement autour d'un moyeu fixe 6 - voir **figure 1b**). Ces redresseurs ont pour fonction de redresseur le flux avant son éjection par une tuyère (non illustrée). La veine secondaire Vs a, dans une vue en coupe, une forme d'anneau régulier, avec une répartition régulière des OGV, de sorte que la surface S de veine secondaire entre chaque aube OGV est constante. Le mot surface est ici employé pour une superficie ou une section de passage d'aire.

Le rayon externe de la veine secondaire au niveau des OGV résulte d'un compromis entre :
- les performances aérodynamiques de la grille OGV, qui se détériorent lorsque le niveau de Mach augmente et donc lorsque la surface de la veine diminue (car à débit constant cela signifie que la vitesse d'écoulement augmente),
- la masse du moteur, qui s'accroit lorsque le diamètre de la veine augmente,
- les contraintes d'intégration moteur, qui imposent le rayon intérieur minimal de la veine secondaire et en limite le rayon maximal extérieur (intégration sous l'aile d'avion, garde au sol).

Avec l'augmentation des niveaux de BPR souhaitée, la taille verticale du moteur devient critique pour intégration sous aile.

Une solution est de restreindre le rayon et donc la section au niveau des OGV, mais ceci conduit à augmenter le nombre de mach à cet endroit et donc augmenter les pertes des OGV.

Le compromis aboutit alors à une situation où les performances de la grille OGV sont limitées par le rayon extérieur de la veine.

Les documents EP 3 020 952 A1, EP 2 371 714 A2 et US 5,369,954 décrivent une turbomachine comprenant une paroi externe de veine secondaire dont la distance à l'axe longitudinal de turbomachine suivant un premier axe est supérieure à la distance à l'axe longitudinal de turbomachine suivant un deuxième axe.

### PRESENTATION DE L'INVENTION

Afin de résoudre certains des problèmes cités précédemment, l'invention propose une portion de turbomachine double flux, selon la revendication 1, s'étendant autour d'un axe longitudinal, comprenant :
- une paroi externe et une paroi interne, définissant une portion de veine secondaire,
- une grille d'aubes de redresseurs, chaque redresseur s'étendant au sein de la portion de veine secondaire entre la paroi externe et la paroi interne, dans laquelle,

au niveau de la grille d'aube de redresseurs et dans un plan orthogonal à l'axe longitudinal, la distance de la paroi externe à l'axe longitudinal selon un premier axe orthogonal à l'axe longitudinal est supérieure à la distance de la paroi externe à l'axe longitudinal selon un deuxième axe orthogonal à l'axe longitudinal et au premier axe, et
dans lequel la paroi externe définit dans le plan orthogonal à l'axe longitudinal une forme de type concave lorsque vue depuis l'intérieur de la veine (ou convexe depuis l'extérieur de la veine).

De la sorte, la section de la veine secondaire est augmentée au niveau des aubes de redresseurs OGV, ce qui permet de baisser la vitesse d'écoulement au bord d'attaque des OGV sans modifier l'encombrement vertical du moteur. Les effets négatifs mentionnés en introduction sont réduits.

Dans un mode de réalisation, la distance de la paroi interne à l'axe longitudinal selon le premier axe (à un azimut de 3h et/ou 9h) est supérieure à la distance de la paroi interne à l'axe longitudinal selon le deuxième axe (à un azimut de 12h et/ou 6h).

Préférablement le ratio entre les distances orthogonales de la paroi externe à l'axe longitudinale selon le premier axe d'une part et selon le deuxième axe d'autre part est compris entre 1.05 et 1.5. En tenant compte des distances maximales (qui peuvent être ailleurs que sur le premier et le deuxième axe, ce ratio est compris entre 1.05 et 1.75).

Avantageusement, la surface comprise entre deux aubes de redresseurs adjacents, la paroi interne et la paroi externe, dans un plan orthogonal à l'axe longitudinal, est constante sur toute la grille d'aube de redresseurs, à 10% près.

Dans un mode de réalisation, la distance de la paroi externe à l'axe longitudinal est minimale selon le deuxième axe (c'est-à-dire à un azimut de 12h ou 6h) et/ou maximal selon le premier axe (c'est à dire à un azimut de 3h ou 9h).

Dans un mode de réalisation, la distance de la paroi externe à l'axe longitudinal augmente progressivement lorsque l'azimut se déplace depuis le deuxième axe vers le premier axe, c'est-à-dire depuis les azimuts 12h ou 6h vers les azimuts 3h ou 9h.

Dans un mode de réalisation, la paroi externe définit dans le plan orthogonal à l'axe longitudinal une forme :
- Ovale, c'est-à-dire une courbe plane fermée concave, possédant deux axes de symétrie orthogonaux, par exemple une ellipse ou une oblongue,
- ovoïde, c'est-à-dire une courbe plane fermée concave possédant un seul axe de symétrie.

Dans un mode de réalisation, la paroi externe définit dans le plan orthogonal à l'axe longitudinal une forme oblongue construite à l'aide de deux centres à partir desquels sont tracées des portions de cercles, reliées entre elle par des droites.

Les portions de cercles peuvent être des demi-cercles ou des portions de cercle strictement inférieures à un demi-cercle.

Selon l'invention, la paroi interne définit dans le plan orthogonal à l'axe longitudinal une forme identique à celle de la paroi externe, de sorte que la hauteur de la veine soit globalement constante.

Dans un mode de réalisation, la distance entre les deux centres est comprise entre strictement 0 et le rayon de la portion de cercle de la paroi interne.

La portion de turbomachine peut comprendre un bec de séparation, en amont de la paroi interne, le bec de séparation définissant la séparation du flux entre la veine secondaire et une veine primaire, dans lequel le bec de séparation a une forme axisymétrique autour de l'axe longitudinal.

La portion de turbomachine peut comprendre une tuyère d'éjection, en aval de la paroi externe, dans lequel la tuyère a une forme axisymétrique autour de l'axe longitudinal.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
La figure 1a illustre une vue tridimensionnelle partielle d'une turbomachine conventionnelle.
La figure 1b illustre une section d'une veine secondaire au niveau des redresseurs dans une turbomachine conventionnelle.
La figure 2 illustre une section d'une veine secondaire non axisymétrique au niveau des redresseurs dans une turbomachine selon un exemple, qui n'est pas couvert par les revendications.
La figure 3a illustre une méthode de réalisation d'une veine non axisymétrique.
La figure 3b illustre une méthode de réalisation d'une veine non axisymétrique.

### DESCRIPTION DETAILLEE

Une portion de turbomachine 1 double flux conforme à un mode de réalisation de l'invention est illustré en **figure 2****.** La turbomachine s'étend autour d'un axe longitudinal A ; cet axe correspond notamment à un axe de rotation d'un fan, de compresseurs et de turbines.

Dans un plan orthogonal à l'axe longitudinal A, on définit un premier axe X1, correspondant en pratique à une direction horizontale (lorsque la turbomachine est montée sur un banc d'essai ou sur un pylône typiquement sous une aile), et un deuxième axe X2, orthogonal au premier axe X1, correspondant en pratique à une direction verticale. Le deux axes X1 et X2 intersectent l'axe longitudinal A.

En traduisant en matière d'azimut, le premier axe X1 correspond à un azimut 3h-9h et le premier axe X2 correspond à un azimut 12h-6h.

La portion de turbomachine 1 comprend une paroi externe Pe et une paroi interne Pi, qui définissent ensemble une portion de veine secondaire Vs à l'intérieur de laquelle s'écoule un flux d'air, appelé flux secondaire. La portion de turbomachine 1 est en aval du fan et en amont d'une tuyère d'échappement. La paroi externe Pe est montée sur un carter (non illustré) et la paroi interne Pi est montée sur un moyeu (non illustré).

Au sein de la portion de veine secondaire Vs se trouve une grille d'aubes de redresseurs OGV. Elles s'étendent selon une direction sensiblement radiale entre la paroi interne Pi et la paroi externe Pe. Leur rôle est de redresser le flux en sortie de fan.

Le nombre d'aube de redresseurs OGV peut être compris entre 35 et 60, ou entre 30 et 40, ou entre 15 et 30.

Selon une vue en coupe, illustrée en **figure 2****,** la portion de veine secondaire Vs au niveau de la grille OGV n'est pas axisymétrique : elle est plus large que haute, ce qui signifie que la distance orthogonale (aussi appelée rayon) de l'axe longitudinal A la paroi extérieure Pe est plus importante selon le premier axe X1 (donc aux azimuts 3h et 9h) que selon le deuxième axe (X2) (donc aux azimuts 12h et 6h).

Grâce à cette conception, qui élargit la veine secondaire au niveau des OGV, on peut réduire la vitesse d'écoulement (à débit constant) et donc les nuisances sonores. L'élargissement profite du fait qu'il y a de l'espace disponible à droite et à gauche d'une turbomachine lorsqu'elle est montée sous aile, alors qu'il n'y a pas de place au-dessous.

Le ratio du rayon selon le premier axe X1 sur le rayon selon le second axe X2 est typiquement compris entre 1.05 et 1.5.

La caractérisation dimensionnelle donnée précédemment ne signifie pas que la distance orthogonale de l'axe longitudinal A à la paroi externe Pe est maximale sur le premier axe X1. Cette caractérisation vise à traduire l'absence d'axisymétrie.

Le ratio rayon maximal sur rayon minimal (à partir de l'axe longitudinal A) est typiquement compris entre 1.05 et 1.75.

Toutefois, préférablement, ladite distance est maximale selon le premier axe X1, soit à l'azimut 3h, soit à l'azimut 9h, soit aux deux.

Inversement, pour optimiser l'encombrement vertical, ladite distance est minimale selon le deuxième axe X2, soit à l'azimut 12h, soit à l'azimut 6h, soit aux deux.

On privilégie une double symétrie selon les deux axes X1 et X2.

De plus, pour avoir une paroi extérieure Pe régulière, ladite distance augmente préférablement de façon continue lorsque l'azimut se déplace du deuxième axe X2 vers le premier axe X1, (c'est à dire depuis l'azimut 12h vers 3h ou 9h, et depuis l'azimut 6h vers 3h ou 9h).

La paroi extérieure Pe définie une surface globalement concave vue depuis l'intérieur de la veine (vue de l'axe longitudinal A, la paroi extérieure Pe est bombée radialement vers l'extérieur), sauf à ce que localement, des déformations de la paroi extérieure Pe soient prévues (passage de servitudes, etc.).

Plusieurs formes de paroi extérieure Pe peuvent être développées. La paroi extérieure Pe peut avoir une forme ovale (c'est-à-dire une courbe plane fermée concave vue depuis l'intérieur de la veine, possédant deux axes de symétries orthogonaux, qui sont préférablement les axes X1 et X2). Parmi les ovales, on peut avoir les ellipses, les formes oblongues (deux arcs de cercle reliés entre eux par des droites ou formes assimilées).

La paroi extérieure Pe peut avoir une forme ovoïde (c'est-à-dire une courbe plane fermée concave vue depuis l'intérieur de la veine, possédant un seul axe de symétrie, qui est préférablement l'axe X1).

La paroi intérieure Pi peut ne pas être axisymétrique et les mêmes considérations que pour la paroi extérieure Pe s'appliquent alors. Il se peut en outre que la forme de la paroi intérieur Pi, non axisymétrique, soit différente de la forme de la paroi extérieur Pe, non axisymétrique.

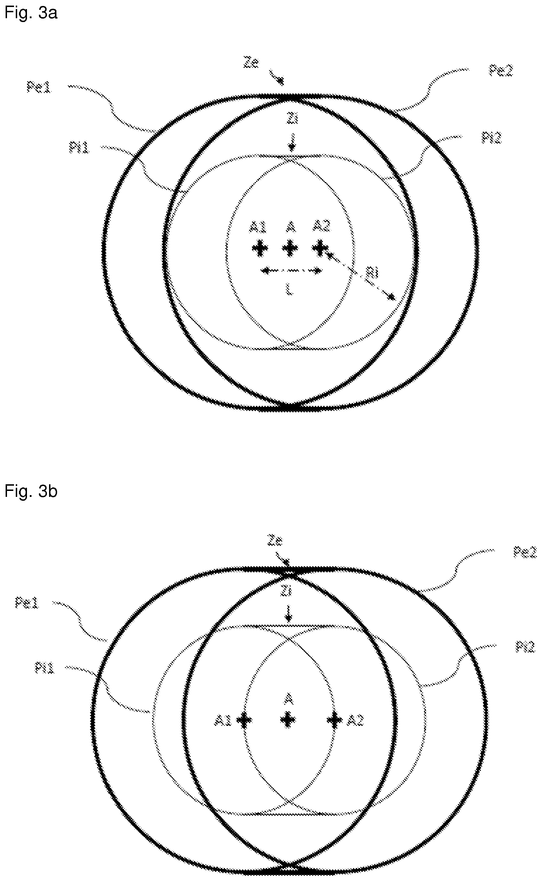

Ainsi, dans une variante, la paroi intérieure Pi présente une forme circulaire en coupe **(****figure 2****).** Dans une autre variante, cette paroi intérieure Pi n'est pas axisymétrique **(****figures 3a et 3b****)** et a une forme similaire celle de la paroi extérieure Pe. Dans une variante non illustrée, la paroi intérieure Pi n'est pas axisymétrique mais pas de forme similaire à la paroi extérieure Pe.

La **figure 2** illustre aussi la grille de redresseur OGV. Afin d'éviter les perturbations aérodynamiques, les différentes aubes OGV sont positionnées de sorte que les surfaces S1, S2 de veine secondaire Vs entre deux aubes de redresseur OGV adjacentes soient identiques. Du fait de l'absence d'axisymétrie, on peut accepter une tolérance à 10% entre la surface maximale et la surface minimale. Comme le débit est fonction de la section et la vitesse, une section constante permet d'assurer un débit constant (à vitesse constante par ailleurs).

La grille OGV se trouve en aval d'un bec de séparation 5 (voir **figure 1**), à la jonction entre les veines primaires VP et secondaire Vs, qui sépare le flux d'air issu du fan en un flux primaire et un flux secondaire. Le bord de séparation 5 (tel qu'illustré en **figure 1**) a préférablement une forme axisymétrique autour de l'axe longitudinal A lorsque la grille de redresseurs OGV est suffisamment éloignée du bec de séparation 5 (par exemple plus de 20cm et en particulier plus de 50cm). Alternativement, ce dernier peut aussi ne pas avoir une forme axisymétrique, mais cela nécessite de revoir la conception de cette pièce.

A présent, un mode de réalisation pour concevoir une paroi extérieure Pe et une paroi intérieure Pi oblongue va être décrit, en référence aux **figures 3a et 3b****.** La description se fait dans un plan orthogonal à l'axe longitudinal A.

Dans ce mode de réalisation, la portion de veine secondaire Vs comprend deux axes longitudinaux supplémentaires A1 et A2, parallèlement à l'axe longitudinal A, chacun positionné symétriquement (symétrie axiale) de l'autre autour de l'axe A, le long du premier axe X1. On appelle L la distance entre les deux axes A1 et A2 (dans le plan orthogonal à ces axes).

A partir de A1 est tracé un arc de cercle qui forme un côté Pe1 de la paroi externe Ve et un autre arc de cercle, de rayon Ri inférieur, qui forme un côté de la paroi interne Pi1.

A partir de A2 est tracé un arc de cercle qui forme un côté Pe2 de la paroi externe Ve et un autre arc de cercle, de rayon Ri, qui forme un côté de la paroi interne Pi2.

Les côtés Pe1 et Pe2, Pi1 et Pi2 ont les mêmes rayons respectifs.

Sur les **figures 3a et 3b****,** les arcs de cercle sont des demi-cercles. Ensuite, afin de finaliser la veine, on raccorde les côtés Pe1 et Pe2 par deux raccords Ze, rectilignes, et les côtés Pi1 et Pi2 par deux raccords Zi, rectilignes.

Alternativement, les arcs de cercle Pe1, Pe2, Pi1, Pi2 peuvent être des arcs de cercle strictement inférieurs à un demi-cercle. Cela permet d'augmenter le rayon de la paroi externe Pe en limitant l'encombrement vertical. Afin d'avoir une surface qui ne présente pas de brusque décrochement, on procède à un raccordement adouci, par exemple par tangente entre les arcs de cercle Pe1, Pe2 et les raccords Ze, respectivement Pi1, Pi2 et Zi (non illustré). On peut utiliser des courbes polynomiales de degré 2 par exemple.

La distance L entre les deux axes A1 et A2 est strictement supérieure à 0 (sinon la portion de veine est axisymétrique) et inférieure ou égale à Ri (en **figure 3b****,** L=Ri).

L'intérêt majeur de ce mode de réalisation est qu'il permet d'avoir des zones de courbure constante sur les parois Pe1, Pe2 et Pi1, Pi2, ce qui simplifie la conception et l'assemblage de la grille de redresseurs OGV : en effet, à l'inverse, comme sur le mode de réalisation de la **figure 2****,** il faut prévoir une courbure adaptée à l'azimut pour chaque pied et tête d'aube de redresseur OGV.

De plus, ce mode de réalisation assure une hauteur de veine constante : les aubes de redresseur OGV ont donc toute la même longueur.

On peut donc regrouper les aubes de redresseurs OGV par famille.

## Revendications

1. Portion de turbomachine (1) double flux s'étendant autour d'un axe longitudinal (A), comprenant :
- une paroi externe (Pe) et une paroi interne (Pi), définissant une portion de veine secondaire (Vs),
- une grille d'aubes de redresseurs (OGV), chaque redresseur s'étendant au sein de la portion de veine secondaire (Vs) entre la paroi externe (Pe) et la paroi interne (Pi),
dans laquelle, au niveau de la grille d'aube de redresseurs (OGV) et dans un plan orthogonal à l'axe longitudinal (A), la distance de la paroi externe (Pe) à l'axe longitudinal (A) selon un premier axe (X1) orthogonal à l'axe longitudinal (A) est supérieure à la distance de la paroi externe (Pe) à l'axe longitudinal (A) selon un deuxième axe (X2) orthogonal à l'axe longitudinal (A) et au premier axe (X1), et
dans laquelle la paroi externe (Pe) définit dans le plan orthogonal à l'axe longitudinal (A) une forme de type concave lorsque vue depuis l'intérieur de la veine secondaire, **caractérisée en ce que**
la paroi interne (Pi) définit dans ledit plan orthogonal à l'axe longitudinal (A) une forme identique à celle de la paroi externe (Pe), de sorte que la hauteur de la veine soit globalement constante.

2. Portion de turbomachine (1) selon la revendication 1, dans laquelle la surface (S1, S2), comprise entre deux aubes de redresseurs adjacents (OGV), la paroi interne (Pi) et la paroi externe (Pe), dans un plan orthogonal à l'axe longitudinal (A), est constante sur toute la grille d'aubes de redresseur, à 10% près.

3. Portion de turbomachine (1) selon l'une quelconque des revendications 1 à 2, dans laquelle la distance de la paroi externe (Pe) à l'axe longitudinal (A) est minimale selon le deuxième axe (X2) et/ou maximal selon le premier axe (X1).

4. Portion de turbomachine (1) selon l'une quelconque des revendications 1 à 3, dans laquelle la distance de la paroi externe (Pe) à l'axe longitudinal (A) augmente progressivement lorsque l'azimut se déplace depuis le deuxième axe (X2) vers le premier axe (x1).

5. Portion de turbomachine (1) selon l'une quelconque des revendications 1 à 4, dans laquelle la paroi externe (Pe) définit dans le plan orthogonal à l'axe longitudinal une forme :
- ovale, c'est-à-dire une courbe plane fermée concave lorsque vue depuis l'intérieur de la veine secondaire, possédant deux axes de symétrie orthogonaux, par exemple : ellipse, oblongue,
- ovoïde, c'est-à-dire une courbe plane fermée concave lorsque vue depuis l'intérieur de la veine secondaire, possédant un seul axe de symétrie.

6. Portion de turbomachine (1) selon l'une quelconque des revendications 1 à 5, dans laquelle la paroi externe (Pe) définit dans ledit plan orthogonal à l'axe longitudinal (A) une forme oblongue construite à l'aide de deux centres (A1, A2) à partir desquels sont tracées des portions de cercles, reliées entre elle par des droites.

7. Portion de turbomachine (1) selon l'une quelconque des revendications 1 à 6, comprenant un bec de séparation (5), en amont de la paroi interne (Pe), le bec de séparation (5) définissant la séparation du flux entre la veine secondaire (Vs) et une veine primaire (Vp), dans laquelle le bec de séparation (5) a une forme axisymétrique autour de l'axe longitudinal (A).

8. Portion de turbomachine (1) selon l'une quelconque des revendications 1 à 7, comprend une tuyère d'éjection, en aval de la paroi externe (Pe), dans laquelle la tuyère a une forme axisymétrique autour de l'axe longitudinal (A).

## Patentansprüche

1. Abschnitt einer Doppelstrom-Turbomaschine (1), der sich um eine Längsachse (A) erstreckt und Folgendes umfasst:
- eine Außenwand (Pe) und eine Innenwand (Pi), die einen sekundären Kanalabschnitt (Vs) definieren,
- ein Gitter aus Gleichrichterschaufeln (OGV), wobei sich jeder Gleichrichter innerhalb des sekundären Kanalabschnitts (Vs) zwischen der Außenwand (Pe) und der Innenwand (Pi) erstreckt,
wobei am Gitter der Gleichrichtschaufeln (OGV) und in einer Ebene, die orthogonal zur Längsachse (A) verläuft, der Abstand von der Außenwand (Pe) zur Längsachse (A) entlang einer ersten Achse (X1), die orthogonal zur Längsachse (A) verläuft, größer ist als der Abstand von der Außenwand (Pe) zur Längsachse (A) entlang einer zweiten Achse (X2), die orthogonal zur Längsachse (A) und zur ersten Achse (X1) verläuft, und
wobei die Außenwand (Pe) in der Ebene, die orthogonal zur Längsachse (A) verläuft, eine konkavartige Form definiert, wenn sie vom Inneren des sekundären Kanals aus betrachtet wird, **dadurch gekennzeichnet, dass**
die Innenwand (Pi) in der Ebene, die orthogonal zur Längsachse (A) verläuft, eine Form definiert, die mit der der Außenwand (Pe) identisch ist, so dass die Höhe des Kanals im Allgemeinen konstant ist.

2. Abschnitt einer Turbomaschine (1) nach Anspruch 1, wobei die Oberfläche (S1, S2), die zwischen zwei benachbarten Gleichrichterschaufeln (OGV), der Innenwand (Pi) und der Außenwand (Pe), vorhanden ist, in einer Ebene, die orthogonal zur Längsachse (A) verläuft, über das gesamte Gitter der Gleichrichterschaufeln bis auf 10 % konstant ist.

3. Abschnitt einer Turbomaschine (1) nach einem der Ansprüche 1 bis 2, wobei der Abstand von der Außenwand (Pe) bis zur Längsachse (A) entlang der zweiten Achse (X2) minimal und/oder entlang der ersten Achse (X1) maximal ist.

4. Abschnitt einer Turbomaschine (1) nach einem der vorhergehenden Ansprüche 1 bis 3, wobei der Abstand von der Außenwand (Pe) bis zur Längsachse (A) allmählich zunimmt, wenn sich der Azimut von der zweiten Achse (X2) zur ersten Achse (X1) hin bewegt.

5. Abschnitt einer Turbomaschine (1) nach einem der Ansprüche 1 bis 4, wobei die Außenwand (Pe) in der Ebene, die orthogonal zur Längsachse verläuft, folgende Form definiert:
- eine ovale Form, d. h. eine geschlossene ebene konkave Kurve, wenn sie vom Inneren des sekundären Kanals aus betrachtet wird, mit zwei orthogonalen Symmetrieachsen, zum Beispiel: ellipsenförmig, länglich,
- eine eiförmige Form, d. h. eine geschlossene ebene konkave Kurve, wenn sie vom Inneren des sekundären Kanals aus betrachtet wird, mit einer einzigen Symmetrieachse.

6. Abschnitt einer Turbomaschine (1) nach einem der Ansprüche 1 bis 5, wobei die Außenwand (Pe) in der Ebene, die orthogonal zur Längsachse (A) verläuft, eine längliche Form definiert, die mittels zweier Mittelpunkte (A1, A2) errichtet wird, von denen aus Kreisabschnitte gezeichnet werden, die durch gerade Linien miteinander verbunden sind.

7. Abschnitt einer Turbomaschine (1) nach einem der Ansprüche 1 bis 6, umfassend eine Trenntülle (5) stromaufwärts der Innenwand (Pe), wobei die Trenntülle (5) die Trennung des Stroms zwischen dem sekundären Kanal (Vs) und einem primären Kanal (Vp) definiert, wobei die Trenntülle (5) eine achsensymmetrische Form um die Längsachse (A) aufweist.

8. Abschnitt einer Turbomaschine (1) nach einem der Ansprüche 1 bis 7, umfassend eine Ausstoßdüse stromabwärts der Außenwand (Pe), wobei die Düse eine axialsymmetrische Form um die Längsachse (A) aufweist.

## Claims

1. Turbomachinery portion (1) with double flow extending around a longitudinal axis (A), comprising:
- an outer wall (Pe) and an inner wall (Pi), defining a secondary flow portion (Vs),
- a grid of straightener vanes (OGV), each straightener extending within the secondary vein portion (Vs) between the outer wall (Pe) and the inner wall (Pi),
wherein, at the grid of straightener vanes (OGV) and in a plane orthogonal to the longitudinal axis (A), the distance of the outer wall (Pe) from the longitudinal axis (A) along a first axis (X1) orthogonal to the longitudinal axis (A) is greater than the distance of the outer wall (Pe) from the longitudinal axis (A) along a second axis (X2) orthogonal to the longitudinal axis (A) and to the first axis (X1),
wherein the outer wall (Pe) defines in the plane orthogonal to the longitudinal axis (A) a concave-like shape when viewed from inside the secondary vein, and
in which the inner wall (Pi) defines in said plane orthogonal to the longitudinal axis (A) a shape identical to that of the outer wall (Pe), so that the height of the vein is generally constant.

2. Turbomachine portion (1) according to claim 1, in which the surface area (S1, S2) between two adjacent straightener vanes (OGV), the inner wall (Pi) and the outer wall (Pe), in a plane orthogonal to the longitudinal axis (A), is constant over the entire straightener vane grid, to within 10%.

3. Turbomachine portion (1) according to any one of claims 1 to 2, in which the distance of the outer wall (Pe) from the longitudinal axis (A) is minimal along the second axis (X2) and/or maximal along the first axis (X1).

4. Turbomachine portion (1) according to any one of claims 1 to 3, in which the distance of the outer wall (Pe) from the longitudinal axis (A) increases progressively as the azimuth moves from the second axis (X2) towards the first axis (X1).

5. Turbomachine portion (1) according to any one of claims 1 to 4, in which the outer wall (Pe) defines in the plane orthogonal to the longitudinal axis a shape :
- oval, i.e. a closed concave plane curve when viewed from inside the secondary vein, having two orthogonal axes of symmetry, e.g. ellipse, oblong,
- ovoid, i.e. a concave closed plane curve when viewed from inside the secondary vein, with a single axis of symmetry.

6. Turbomachine portion (1) according to any one of claims 1 to 5, in which the outer wall (Pe) defines in said plane orthogonal to the longitudinal axis (A) an oblong shape constructed by means of two centers (A1, A2) from which are traced portions of circles, interconnected by straight lines.

7. Turbomachine portion (1) according to any one of claims 1 to 6, comprising a separation nozzle (5), upstream of the inner wall (Pe), the separation nozzle (5) defining the flow separation between the secondary flow (Vs) and a primary flow (Vp), wherein the separation nozzle (5) has an axisymmetric shape around the longitudinal axis (A).

8. A turbomachine portion (1) according to any one of claims 1 to 7, comprising an ejection nozzle, downstream of the outer wall (Pe), in which the nozzle has an axisymmetric shape about the longitudinal axis (A).
